# EUROPÄISCHE PATENTSCHRIFT

(11) **EP 1 877 208 B1**
(45) Veröffentlichungstag und Bekanntmachung des Hinweises auf die Patenterteilung: **15.07.2009**
(21) Anmeldenummer: 05745206.2
(22) Anmeldetag: 28.04.2005
(51) Int. Cl.: B21L 9/06, F16G 13/16

(54) **VERFAHREN UND VORRICHTUNG ZUR HERSTELLUNG EINER KETTE**
METHOD AND DEVICE FOR PRODUCING A CHAIN
PROCEDE ET DISPOSITIF POUR PRODUIRE UNE CHAINE

(43) Veröffentlichungstag der Anmeldung: 16.01.2008
(73) Patentinhaber: Kabelschlepp GmbH, 57074 Siegen (DE)
(72) Erfinder: SCHNEIDER, Toralf, 01665 Triebischtal-Piskowitz (DE)
(74) Vertreter: Neumann, Ditmar
(86) Internationale Anmeldenummer: PCT/DE2005/000779
(87) Internationale Veröffentlichungsnummer: WO 2006/114067

(56) Entgegenhaltungen:
- DE-A1-8102004 027 26
- DE-C- 950 765

## Beschreibung

Die vorliegende Erfindung betrifft ein Verfahren und eine Vorrichtung zum Herstellen einer Kette, welche aus Kettengliedern 2 und Verbindungselementen 1 besteht, aus formbaren Materialien, insbesondere aus Kunststoff.

Die Erfindung wird vorzugsweise zur im wesentlichen kontinuierlichen Herstellung von Energieführungsketten, ausgehend von mindestens einem Spritz- bzw. Stranggußteil und unter Durchführung von Form- und Trennvorgängen verwendet. Die derart hergestellten Energieführungsketten bestehen aus mehreren Gliedern mit einzelnen Verbindungselementen, wobei die Ketten aus miteinander verbundenen Elementen bestehen, die an ihren Enden zwei sich nach außen erstreckende Gelenkzapfen bzw. zwei in ihrem Durchmesser dem Durchmesser der Gelenkzapfen entsprechende Verbindungsöffnungen aufweisen, wobei benachbarte Kettenglieder durch die in die Verbindungsöffnungen eingreifenden Gelenkzapfen verbunden sind.

Energieführungsketten, auch als Energieketten oder Schleppketten bezeichnet, werden dazu verwendet, flexible Leitungen, insbesondere Versorgungsleitungen, zu einem beweglichen oder verfahrbaren Abnehmer hinzuführen. Diese Energieführungsketten sind aus einer Vielzahl von Kettengliedern, die ein kastenförmiges Profil aufweisen, zusammengesetzt. Diese Kettenglieder besitzen an ihren Enden eine Gelenkverbindung, um welches sie zueinander verschwenken. Eine Begrenzung des Winkels gewährleistet, dass die in der Energieführungskette geführten Leitungen nur in einem bestimmen Biegeradius gebogen werden.

Im Stand der Technik sind verschiedene Verfahren zur Herstellung von Energieführungsketten bekannt. Dabei werden üblicherweise die einzelnen Kettenglieder als Spritzgußteile aus Kunststoff hergestellt. Anschließend wird eine vorgegebene Anzahl Kettenglieder zum Erzielen der gewünschten Länge der Energieführungskette miteinander verbunden. Die Kettenglieder besitzen an ihrem einen Ende auf gegenüberliegenden Seiten des Kastenprofils üblicherweise jeweils einen Gelenkzapfen, während an dem anderen Ende zwei laschenartige Fortsätze vorgesehen sind, die jeweils eine Öffnung aufweisen, deren Durchmesser dem Durchmesser des zugeordneten Gelenkzapfens entspricht. Zur Verbindung werden die beiden Laschen auseinander gebogen. Die Laschen werden über die beiden Gelenkzapfen geschoben, bis die Gelenkzapfen in die Verbindungsöffnungen einrasten.

Nachteilig ist dabei der aufwendige mehrstufige Fertigungs- und Montagevorgang.

Nach DE 100 17 514 A1 ist ein Verfahren zur Herstellung von Führungsketten aus Kunststoff bekannt. Diese Führungsketten bestehen aus Kettengliedern mit Kastenprofil, wobei jedes Kettenglied einen Grundkörper mit Gelenkzapfen und Verbindungsöffnungen aufweist, wobei benachbarte Kettenglieder durch Eingriff der Gelenkzapfen in die Verbindungsöffnungen drehbar verbunden sind. Bei diesem Verfahren wird zunächst ein kastenförmiges Strangußteil bereitgestellt, anschließend werden Gelenkverbindungen durch Formungs-und/oder Trennvorgänge, die jeweils die Außenkontur der Gelenkzapfen bilden, hergestellt. Die Seitenwände werden jeweils in einen inneren und äußeren Teil getrennt; die äußeren Seitenteilwände werden durchtrennt. Die inneren Seitenteilwände werden durchtrennt, bis schließlich die oberen und unteren Flächen des Kastenprofils ebenfalls durchtrennt werden.

Nachteilig ist, dass bei diesen Fertigungsschritten eine Vielzahl von Einzelteilen für Trennvorgänge erforderlich sind, zu deren Durchführung aufwendige Messer mit filigranen Schneiden erforderlich sind.

Des weiteren ist es im Stand der Technik bekannt, einstückige Energieführungssysteme aufzubauen, indem zunächst langgestreckte Bauteile extrudiert werden und diese anschließend in mehreren Bearbeitungsschritten durch mechanische Bearbeitungen wie Stanzen, Schneiden oder Biegen so gestaltet werden, dass sie in vorgegebenen Radien umgelenkt werden können. Nachteilig ist dabei, dass die Gelenkverbindungen diese Führungsketten durch entsprechende Querschnittsveränderung des extrudierten Körpers keine ausreichende Flexibilität zeigen und somit bruchgefährdet sind.

Nachteilig ist dabei, dass diese kontinuierlich gefertigte Profile mit nachträglich eingebrachten Funktionen große Freiheitsgrade erfordern und verschleißanfällig sind.

Nach DE-A1 197 10 489 ist ein Verfahren zur Herstellung einer Führungskette bekannt, die dort auch als Schutzelement für beweglich verlegte Leitungen bezeichnet wird. Zur Herstellung dieses Schutzelements wird zunächst ein flächiges Kunststoffteil einteilig gespritzt oder gegossen, das untereinander durch verbiegbare Brücken verbundene Segmente aufweist. Jedes Schutzelement ist mit einem Kettenglied vergleichbar und besitzt eine Bodenfläche, zwei Seitenflächen und eine Oberseitenfläche, in Form eines Bands, miteinander durch Sollbiegestellen verbunden. Die einzelnen Flächen können zu einem kastenförmigen Segment gefaltet werden, wobei das Oberseitenflächenelement mit dem freien Ende an der freien Kante des einen Seitenflächensegments verbunden wird. Während sich die beiden Seitenflächenteile an zwei gegenüberliegenden Seiten des Bodenflächenelements anschließen, sind die einzelnen, benachbarten Bodenflächenelemente an ihren anderen Längsseiten miteinander verbunden, so dass dann, wenn die jeweiligen Flächenteile, die den jeweiligen Bodenflächen zugeordnet sind, zu einem kastenförmigen Element gefaltet sind, die jeweiligen kastenförmigen Segmente - oder Kettenglieder - an den Längskanten der Bodenflächen über eine Sollbiegestelle verbunden sind. Auch bei diesem Verfahren ist ein hoher Montageaufwand erforderlich, da die einzelnen Segmente aus den Flächenelementen gefaltet werden müssen. Derartige Ketten weisen eine geringe Stabilität auf, da das kastenförmige Profil im Bereich der Kanten, an denen die Segmente gefaltet sind, nur eine geringe Formstabilität gewährleistet. Schließlich sind auch die Sollbiegestellen, die durch die Verringerung der Materialstärke erzeugt sind, aufgrund von Materialermüdungserscheinungen beim Gebrauch der Führungskette der Gefahr eines Bruchs ausgesetzt.

Nach DE-A1 197 10 489 sollen die Seitenflächensegmente mit Gelenkteilen in Form von Zapfen und Führungslöchern versehen werden, so dass nach der Faltung einzelner Segmentteile die Gelenkteile jeweils benachbarter Glieder ineinandergreifen.

Auch bei diesem Verfahren ist nachteilig, dass eine aufwendige Faltung der einzelnen kastenförmigen Profile vorgenommen werden.

Der- vorliegenden Erfindung liegt die Aufgabe zugrunde, ein Verfahren und eine Vorrichtung zum Herstellen einer Kette, welche aus Kettengliedern und Verbindungselementen besteht, anzugeben, bei denen die hergestellten Ketten im wesentlichen kontinuierlich herstellbar sind, wobei Trennschnitte weitgehend entbehrlich sind und wobei belastbare und haltbare Gelenkverbindungen von Kettenelementen herstellbar sind.

Erfindungsgemäß wird die Aufgabe mit den in den Ansprüchen 1 bis 4, 13 und 16 angegebenen Merkmalskombinationen gelöst.

Die Erfindung weist eine Reihe von Vorteilen auf. Durch die Merkmalskombinationen der Ansprüche 1 bis 4, 13 und 16 gelingt eine kontinuierliche Fertigung von Ketten, bei der Gelenke zwischen Kettengliedern und Verbindungselementen unmittelbar hergestellt werden. Insbesondere sind zusätzliche Verfahrensschritte zur Gelenkherstellung entbehrlich, da Gelenkzapfen unmittelbar in korrespondierenden Aussparungen durch Spritzguss oder ähnliche Verfahrensschritte herstellbar sind. Durch die Verwendung von Aussparungen mit Hinterschneidung gelingt die Herstellung sicherer Gelenkverbindungen.

Vorteilhaft ist, dass Aussparungen und korrespondierende Gelenkzapfen sowohl an Verbindungselementen als auch an Kettengliedern hergestellt werden können.

Durch das Aufbringen von Trennmitteln auf die Verbindungselemente und/oder wenigstens Teilbereiche von ersten Werkzeugen oder auf Verbindungselemente und/oder auf die Werkzeuge, in die die Verbindungselemente einlegbar sind und/oder auf ein Kernelement, gelingt es, einen Haftverbund zwischen vorgefertigten Verbindungselementen der Kette und den neu herzustellenden Kettengliedern zu verhindern und ein Gleiten der neu hergestellten Kettenglieder auf dem Kernelement sicher zu stellen.

Durch die Ausbildung von Aussparungen als Hinterschneidung gelingt es, drehbare Gelenkzapfen in Richtung ihrer Drehachse in sicherem Kontakt zu den Aussparungen unmittelbar in den Aussparungen herzustellen.

Durch die Herstellung von Anschlägen wird eine definierte Begrenzung der Verdrehung zwischen Verbindungselementen und Kettengliedern ermöglicht, durch die jeweils ein Rollradius der Kette für jede Rollrichtung festgelegt werden kann.

Die Anordnung eines Kernelementes in einem Hohlraum zur Herstellung von Kettengliedern, wobei der Hohlraum in einem Bereich korrespondierender Kettenwerkzeuge mit korrespondierenden Aufnahmeelementen gebildet wird, ermöglicht durch die Erzeugung eines Innenraumes in den hergestellten Kettengliedern, dass zur Aufnahme von Energieleitern geeignete Kettenglieder hergestellt werden.

Die Erfindung wird im folgenden anhand von Ausführungsbeispielen näher erläutert.

Dazu zeigen
- Figur 1: eine perspektivische Ansicht einer Ausführungsform einer erfindungsgemäßen Kette in gestreckter Lage,
- Figur 2: die Ansicht dieser Kette in gerollter Lage,
- Figur 3a: eine perspektivische Ansicht einer Ausführungsform eines Verbindungselementes,
- Figur 3b: eine perspektivische Ansicht einer ersten Ausführungsform einer Vorrichtung zur Herstellung dieser Verbindungselemente,
- Figur 3c: einen ersten Ausschnitt dieser Vorrichtung,
- Figur 3d: einen weiteren Ausschnitt dieser Vorrichtung,
- Figur 3e: eine zweite Ausführungsform einer Vorrichtung zur Herstellung der Verbindungselemente nach Figur 3a,
- Figur 3f: einen ersten Ausschnitt dieser Vorrichtung,
- Figur 3g: einen weiteren Ausschnitt dieser Vorrichtung,
- Figur 3h: eine dritte Ausführungsform einer Vorrichtung zur Herstellung der Verbindungselemente nach Figur 3a,
- Figur 4: eine perspektivische Ansicht einer Ausführungsform eines Kettengliedes,
- Figur 5: eine perspektivische Ansicht einer ersten Ausführungsform einer Vorrichtung zur Herstellung dieser Kettengliedes
- Figur 6a: einen ersten Ausschnitt dieser Vorrichtung mit einer Ausführungsform von Aufnahmeelementen,
- Figur 6b: diese Aufnahmeelemente mit eingelegten Verbindungselementen,
- Figur 6c: einen zweiten Ausschnitt dieser Vorrichtung mit Kettenwerkzeugen,
- Figur 6d: diesen Ausschnitt in Seitenansicht und
- Figur 6e: zwei Kettenwerkzeuge nach Figuren 6c und 6d.

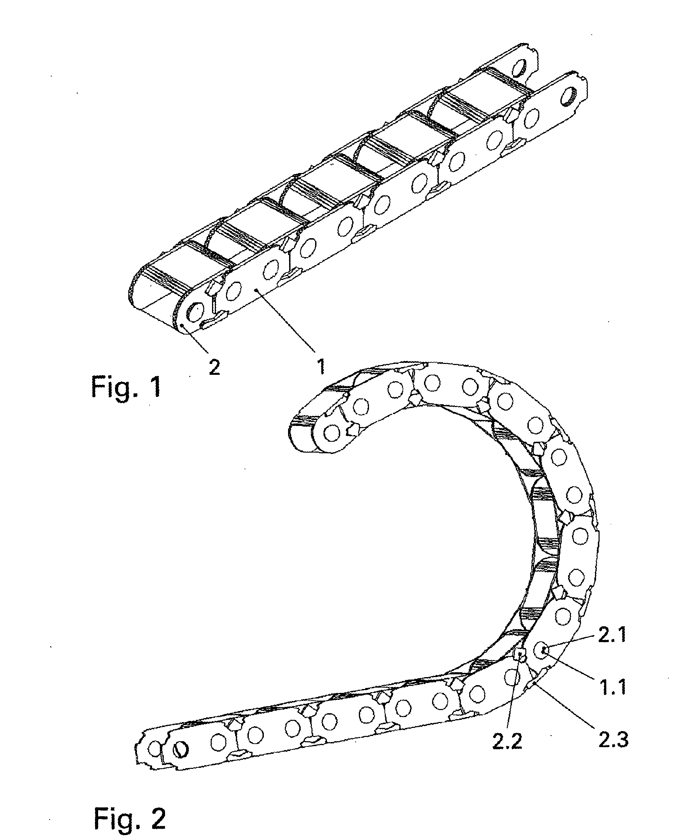

Bei der in **Figur 1** gezeigten Ansicht ist eine Energieführungskette in gestreckter Lage dargestellt. Diese Energieführungskette besteht aus identischen Kettengliedern 2, wobei zwei jeweils benachbarte Kettenglieder 2 mit jeweils zwei Verbindungselementen 1 verbunden sind. Die Kettenglieder 2 sind im Wesentlichen hohlkastenförmig ausgebildet und zur Aufnahme von Leitungen geeignet.

**Figur 2** zeigt diese Energieführungskette in zum Teil gerolltem Zustand. Die Verbindungselemente 1 weisen jeweils zwei kreisförmig ausgebildete Aussparungen 1.1 auf, die in Wirkzusammenhang mit Gelenkzapfen 2.1 stehen, welche an den seitlichen Bereichen der Kettenglieder 2 angeordnet sind. Die Gelenkzapfen 2.1 und die Aussparungen 1.1 bilden zusammen Gelenke, wobei alternativ die Verdrehbarkeit jedes Gelenks durch obere Anschläge 2.2 untere Anschläge 2.3, welche ebenfalls an den seitlichen Elementen der Kettenglieder 2 angeordnet sind, begrenzt wird. Dabei erfolgt die untere Begrenzung durch die unteren Anschläge 2.3 derart, dass sich eine im wesentlichen gestreckte Lage der Kette ergibt. Die obere Begrenzung erfolgt derart, dass ein bestimmter vorgegebener Rollradius für die Kette eingehalten und nicht unterschritten wird.

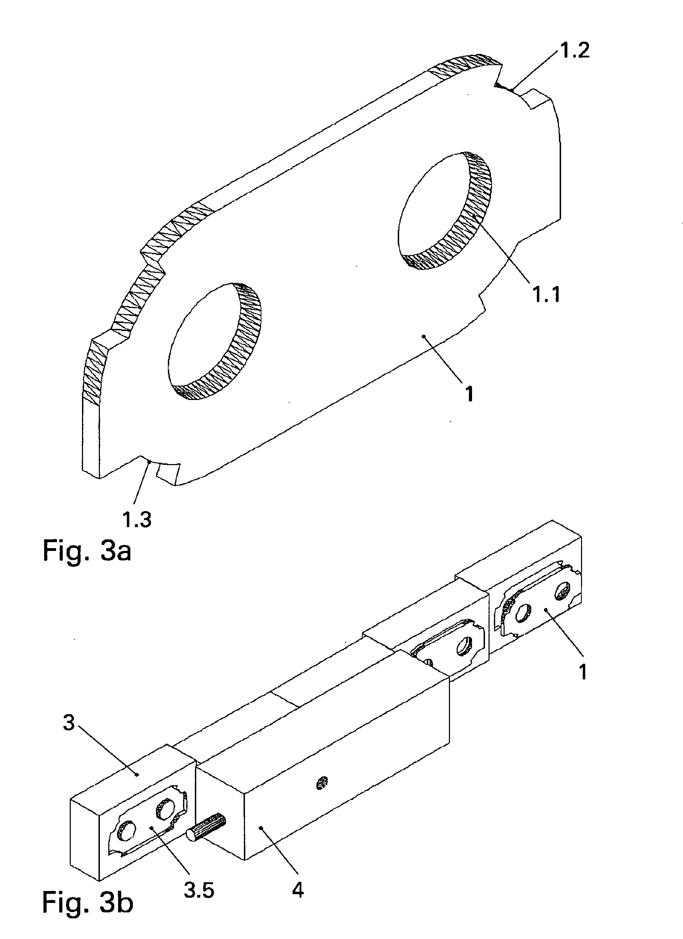

**Figur 3a** zeigt eine perspektivische Ansicht eines Verbindungselementes 1 der Kette nach Figuren 1 und 2. Dieses Verbindungselement 1 weist zwei im wesentlichen kegelstumpfförmige Aussparungen 1.1 auf, wobei der Durchmesser der Aussparungen 1.1 an der Außenseite der Verbindungselemente 1 größer ist als der Durchmesser an der korrespondierenden Innenseite. An den oberen Enden des Verbindungselementes 1 sind obere Rücksprünge 1.2 angeordnet, im unteren Bereich der beiden Enden des Verbindungselementes 1 ist jeweils ein unterer Rücksprung 1.3 angeordnet. Die Rücksprünge 1.2 und 1.3 dienen dazu, in Wirkeinheit mit oberen und unteren Anschlägen 2.2 und 2.3 an den Kettengliedern die Verdrehung der Gelenke der Kette zu begrenzen und damit in jede Rollrichtung der Kette einen vorgegebenen Mindestradius zu bestimmen.

**Figur 3b** zeigt einen Ausschnitt einer Ausführungsform einer Vorrichtung zur Herstellung der Verbindungselemente 1. Diese Vorrichtung besteht im wesentlichen aus mehreren ersten Werkzeugen 3 sowie einer Extruderdüse 4. Die ersten Werkzeuge 3 weisen auf der der Extruderdüse 4 zugewandten Seite jeweils ebene Oberflächen auf. In diesen Oberflächen sind Kavitäten 3.5 angeordnet, die als Form für einzuspritzende aushärtbare Masse zur Herstellung von Verbindungselementen 1 dienen. Die in den Kavitäten 3.5 ausgebildeten beiden Erhebungen sind kegelstumpfförmig und bilden das Gegenstück zu den herzustellenden Aussparungen 1.1 der Verbindungselemente 1. Die ersten Werkzeuge 3 werden in diesem Ausführungsbeispiel jeweils beidseitig an der Extruderdüse 4 vorbeigeführt, wobei in dieser Figur nur auf einer Seite der Extruderdüse 4 die ersten Werkzeuge 3 gezeigt sind.

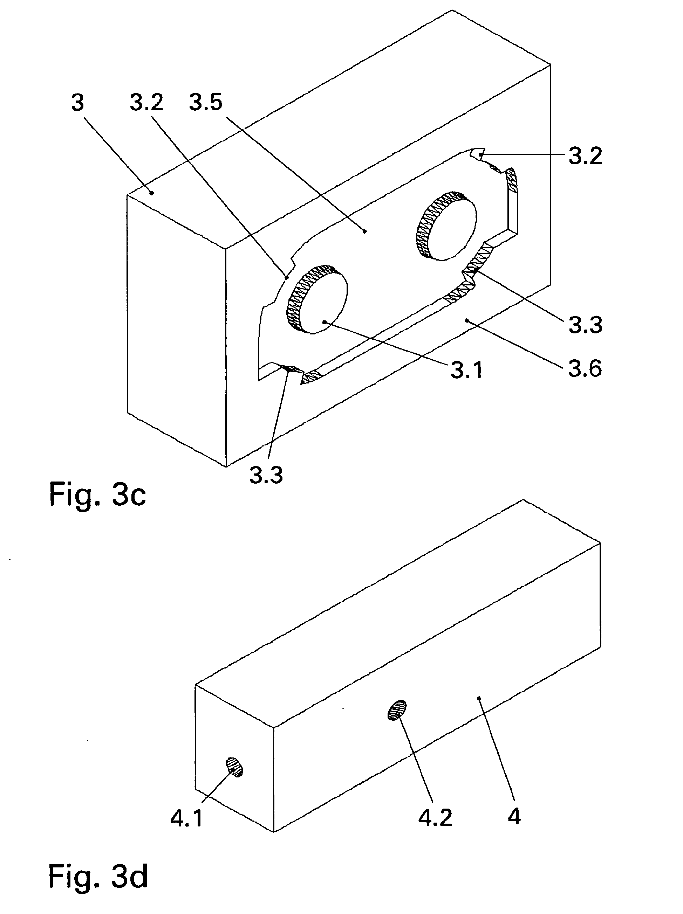

**Figur 3c** zeigt ein einzelnes erstes Werkzeug 3 mit der an der ebenen Innenfläche 3.6 angeordneten Kavität 3.5, in welcher die kegelstumpfförmigen Erhebungen 3.1 angeordnet sind. Die kegelstumpfförmigen Erhebungen 3.1 sind vom Boden der Kavität 3.5 aus verjüngend ausgebildet. Dadurch sind die in den Kavitäten 3.5 herzustellenden Verbindungselemente 1 herausnehmbar. In den oberen Bereichen sind obere Vorsprünge 3.2 ausgebildet; in den unteren Bereichen sind untere Vorsprünge 3.3 ausgebildet. Die Vorsprünge 3.2 und 3.3 dienen der Ausbildung der Rücksprünge 1.2 und 1.3 der zu formenden Verbindungselemente 1.

Die in **Figur 3d** dargestellte Extruderdüse ist mit einer Eintrittsöffnung 4.1 und zwei Austrittsöffnungen 4.2 ausgebildet, wobei hier nur die rechte Austrittsöffnung dargestellt ist. Über die Eintrittsöffnung 4.1 wird flüssiger, aushärtbarer Kunststoff zugeführt, welcher mit hohem Druck durch die Austrittöffnungen 4.2 jeweils in Kavitäten 3.5 der ersten Werkzeuge 3 eingespritzt wird, während die ersten Werkzeuge an der Extruderdüse 4 vorbeigeführt werden und an deren Seitenwand anliegen, während neben der Austrittsöffnung 4.2 die Kavität 3.5 vorbeigeführt wird. Wird die Innenfläche 3.6 des ersten Werkzeuges 3 an den beiden Flächen der Extruderdüse 4 vorbeigeführt, so wird die Austrittsöffnung 4.2 durch die Innenfläche 3.6 des ersten Werkzeuges 3 solange abgedichtet, bis die nächste Kavität 3.5 die Austrittsöffnung erreicht.

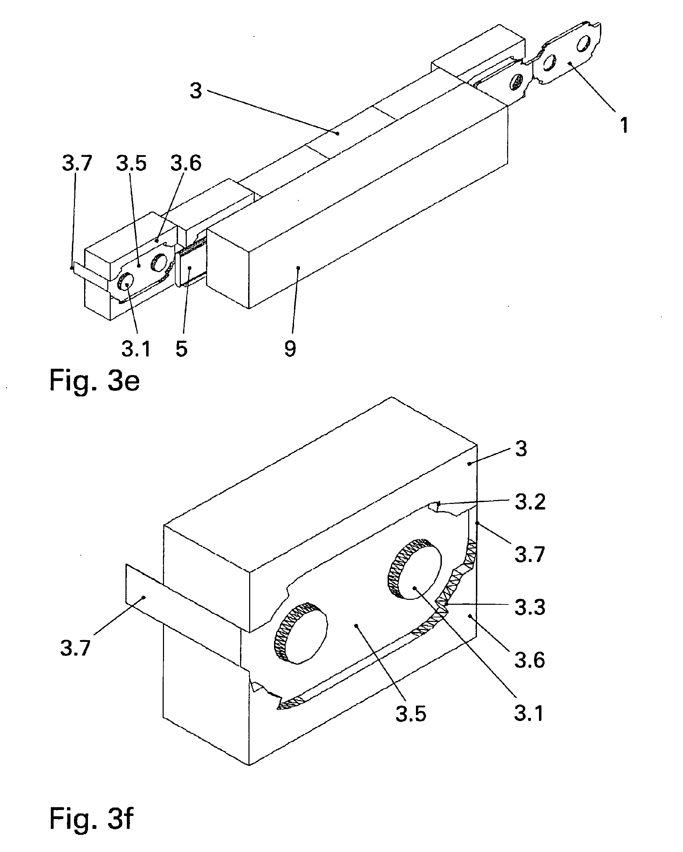

**Figur 3e** zeigt eine zweite Ausführungsform der Vorrichtung zur Herstellung der Verbindungselemente 1 nach Figur 3a. Bei dieser Ausführungsform werden die Verbindungselemente 1 gebildet, in dem ein Stranggut 5 gemeinsam mit den ersten Werkzeugen 3 neben eine Seitenfläche eines Gegenstückes 9 geführt werden und in dem die ersten Werkzeuge 3 gegen die Seitenfläche des Gegenstückes 9 gepresst werden, sodass aus dem Stranggut 5 stempelartig die Verbindungselemente 1 gepresst werden. Bei fortschreitendem Verfahrensablauf werden die ersten Werkzeuge 3 mit den Verbindungselementen 1 in den Kavitäten 3.5 vorbeigeführt, mittels Messer 3.7 werden jeweils benachbarte, neu hergestellte Verbindungselemente 1 voneinander getrennt und anschließend werden die ersten Werkzeuge 3 von dem Gegenstück 9 weggeführt, sodass die voneinander getrennten Verbindungselemente 1 aus den Kavitäten 3.5 herausnehmbar sind.

**Figur 3f** zeigt ein einzelnes Werkzeug 3 der zweiten Ausführungsform gemäß Figur 3e. Die Form der damit herstellbaren Verbindungselemente 1 ist weitgehend gleich mit der Form der Verbindungselemente 1, die mit dem ersten Werkzeug 3 gemäß Figur 3c herstellbar sind. Die Kavitäten 3.5 dieser zweiten Ausführungsform von ersten Werkzeugen 3 ist am seitlichen Rand dieses Werkzeuges 3 offen ausgebildet; sich durch benachbarte erste Werkzeuge 3 überschneidend hergestellte Verbindungselemente 1 werden mit Hilfe der Messer 3.7 voneinander getrennt.

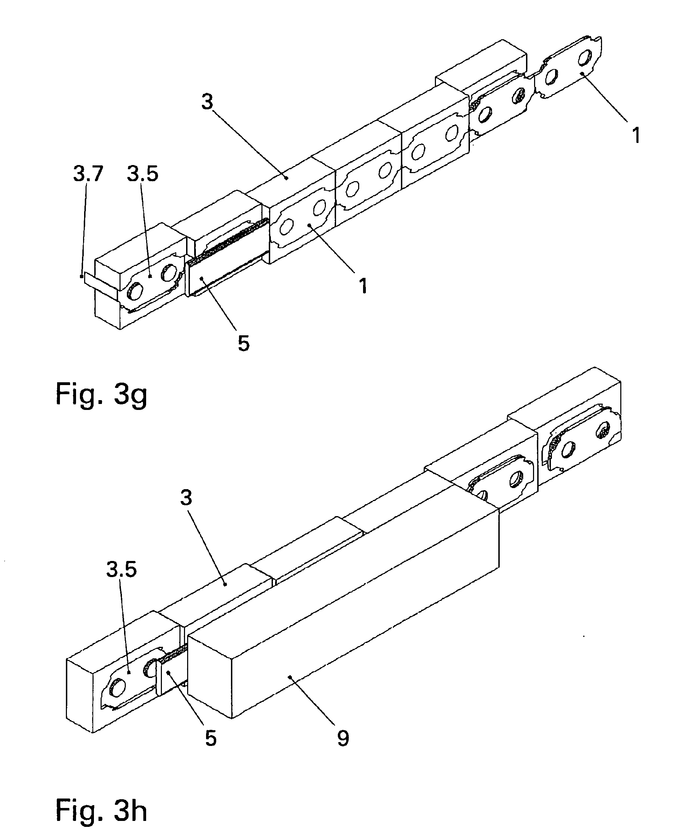

**Figur 3g** zeigt die Vorrichtung gemäß 3e ohne Darstellung des Gegenstückes 9. Bei der hier gewählten Darstellung sind im linken Bereich das Stranggut 5 dargestellt, im mittleren Bereich die gepressten und noch miteinander verbundenen Verbindungselemente 1 und im rechten Bereich sind die herausgenommenen und mittels Messer 3.7 voneinander getrennten Verbindungselemente 1 dargestellt.

**Figur 3h** zeigt eine dritte Ausführungsform der erfindungsgemäßen Vorrichtung. Dabei übernimmt das Gegenstück 9 wie nach Figur 3g die Funktion des Gegenstückes für die stempelartig wirkenden ersten Werkzeuge 3. Diese ersten Werkzeuge 3 mit ihren Kavitäten 3.5 sind analog Figur 3c ausgebildet; hier fungieren die ersten Werkzeuge 3 jedoch nicht als Form für einzuspritzenden Kunststoff, sondern als stempelartige Presse zum Auspressen der Verbindungselemente 1 aus dem Stranggut 5. Ein Vorteil dieser dritten Ausführungsform der erfindungsgemäßen Vorrichtung gegenüber der in Figur 3g dargestellten Vorrichtung besteht darin, dass Messer 3.7 entbehrlich sind.

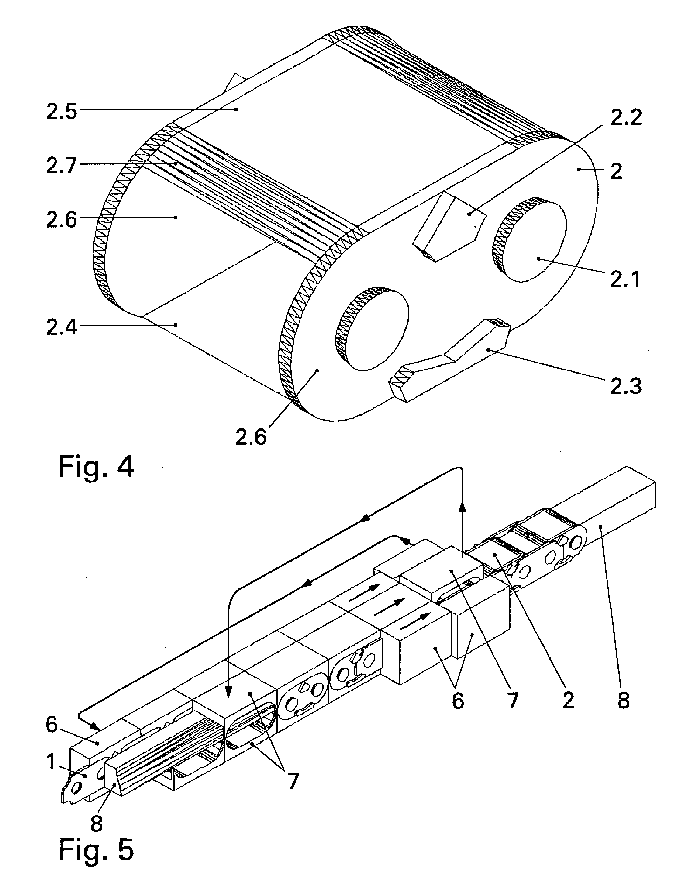

**Figur 4** zeigt eine Ausführungsform eines Kettengliedes 2. Das Kettenglied 2 ist im Spritzgussverfahren im wesentlichen hohlkastenförmig gebildet und weist zwei parallele Seitenwände 2.6, die jeweils flächig ausgebildet sind, auf. Diese Seitenwände 2.6 sind mit einem oberen Steg 2.5 und einem unteren Steg 2.4 miteinander verbunden. Die beiden Enden der Seitenwände 2.6 sind etwa halbkreisförmig ausgebildet. Im Bereich der halbkreisförmigen Enden 2.6 sind etwa konzentrisch Gelenkzapfen 2.1 ausgebildet. Die Gelenkzapfen 2.1 sind kegelstumpfförmig, wobei sich der Durchmesser von der Seitenwand 2.6 weg vergrößert. Die kegelförmige Ausbildung der Gelenkzapfen 2.1 dient dazu, eine Hinterschneidung mit den Aussparungen 1.1 der Verbindungselemente 1 zu bilden, sodass die Verbindungselemente 1 zwar drehbar mit den Kettengliedern 2 verbunden sind, Kettenglieder 2 und Verbindungselemente 1 jedoch nicht voneinander lösbar sind. Im unteren Bereich der Seitenwände ist an der Außenseite mittig jeweils ein unterer Anschlag 2.3 angeordnet. Im oberen Bereich der Seitenwände 2.6 ist jeweils außen ein oberer Anschlag 2.2 angeordnet. Die Anschläge 2.2 und 2.3 dienen dazu, in Wirkeinheit mit den oberen Rücksprüngen 1.2 und den unteren Rücksprüngen 1.3 der Verbindungselemente 1 die Verdrehung der Gelenke, welche aus Aussparungen 1.1 und Gelenkzapfen 2.1 gebildet sind, zu begrenzen. Sowohl der obere Steg 2.5 als auch der untere Steg 2.4 sind mit einer Rundung 2.7 in ihren Endbereichen ausgebildet. Diese Rundungen 2.7 folgen der äußeren Form der halbkreisförmigen Enden der Seitenwände 2.6.
Alternativ ist es möglich, die Kettenglieder 2 u-förmig, das heißt nach oben oder unten offen ohne oberen Steg 2.4 oder 2.5 auszubilden oder wenigstens einen der Stege 2.5 oder 2.4 verschließbar wie zum Beispiel clipbar auszubilden.
Des weiteren ist es alternativ möglich, die Gelenkzapfen 2.1 als Hinterschneidung mit den Aussparungen 1.1 der Verbindungselemente 1 auszubilden, wobei die Verbindungselemente 1 ebenfalls drehbar mit den Kettengliedern 2 verbunden sind, die Kettenglieder 2 und Verbindungselemente 1 jedoch voneinander lösbar sind, in dem die Gelenkzapfen 2.1 elastisch zusammendrückbar ausgebildet sind. Dazu ist es insbesondere möglich, die Gelenkzapfen 2.1 mit wenigstens einer durchgängigen Nut, ähnlich einem tiefen Schlitz eines Schraubenkopfes, auszubilden oder ballige Gelenkzapfen 2.1 aus korrespondierenden Aussparungen 1.1 aus- und einclipsbar auszulilden. Ein weiterer Vorteil ballig ausgebildeter Gelenke ist, insbesondere bei einbandigen Ketten, eine begrenzte, zusätztliche seitliche Rollbarkeit der Kette und/oder eine Tordierbarkeit der Kette.

**Figur 5** zeigt eine erste Ausführungsform eines Teils einer Vorrichtung zur kontinuierlichen Herstellung verbundener Kettenglieder 2. Dazu werden fertige Verbindungselemente 1 zugeführt. Die Zuführung dieser Verbindungselemente 1 erfolgt beidseitig, wobei auf der rechten Seite nur der in Fertigungsrichtung hintere Bereich dargestellt ist. Die fertigen Verbindungselemente 1 sind in Aufnahmeelemente 6 seitlich jeweils nach innen gewandt und gegenüberliegend angeordnet eingelegt. Zwischen jeweils korrespondierenden Aufnahmeelementen 6 sind jeweils zwei Kettenwerkzeuge 7 korrespondierend übereinander angeordnet, welche gemeinsam mit den Aufnahmeelementen 6 in Produktionsrichtung, also in der Darstellung nach rechts, geführt werden. Im Inneren der hintereinander und jeweils korrespondierend oben und unten angeordneten Kettenwerkzeuge 7 ist ein feststehendes Kernelement 8 angeordnet. Dieses feststehende Kernelement 8 ist im rechten Bereich der Darstellung vollständig gezeigt und im linken Bereich der Zeichnung in Bruchdarstellung etwa zur Hälfte gezeigt. Jeweils zwei übereinander angeordnete korrespondierende Kettenwerkzeuge 7 und die neben den Kettenwerkzeugen 7 korrespondierend angeordneten Aufnahmeelemente 6 bilden in Wirkeinheit mit Kernelement 8 die Form für ein einzuspritzendes Kettenglied 2. Die in den Aufnahmeelementen 6 eingelegten Verbindungselemente 1 und das Kernelement 8 werden mit einem Trennmittel versehen. Das Trennmittel dient dazu, einen Haftverbund zwischen dem flüssigen Kunststoff, der in die durch Aufnahmeelemente 6 und Kettenwerkzeug 7 in Wirkeinheit mit dem Kernelement 8 gebildeten Hohlräume eingespritzten flüssigen Kunststoff einerseits und den Verbindungselementen 1 und den Werkzeugen 6,7,8 andererseits zu verhindern. Die Zutrittsöffnungen zum Einspritzen des flüssigen, verfestigbaren Kunststoffes sind nicht dargestellt. Die dargestellte Vorrichtung ermöglicht einen kontinuierlichen Herstellungsprozess einer Energiefiihrungskette; die mit Verbindungselementen 1 bestückten Aufnahmeelemente 6 werden mit den Kettenwerkzeugen 7 zunächst parallel und sich unter Kontakt im wesentlichen nach außen abdichtend am feststehenden Kernelement 8 vorbeigeführt. Dieser Abschnitt ist mit drei parallelen Pfeilen dargestellt. Dabei wird die aus den genannten Elementen 6, 7 gebildete Hohlform und mit flüssigem, verfestigbaren Kunststoff unter Druck gefüllt. Anschließend härtet der Kunststoff aus; dabei bilden sich die Kettenglieder 2, welche in Wirkeinheit mit den eingelegten Verbindungselementen 1 gelangen.
Anschließend werden die Aufnahmeelemente 6 entsprechend der Darstellung der Systempfeile nach außen weggeführt; dabei werden diese von der fertigen Energieführungskette seitlich abgezogen. Anschließend werden die nunmehr entleerten Aufnahmeelemente 6 erneut dem links dargestellten Anfangsbereich der Vorrichtung zugeführt und erneut derart mit Verbindungselementen 1 bestückt, dass deren runde, konische Aussparungen 1.1 den kleineren Durchmesser stets zur Innenseite der Vorrichtung hin angeordnet sind. Die oberen Kettenwerkzeuge 7 werden analog zu den Aufnahmeelementen 6 entsprechend der Darstellung der Systempfeile nach oben und - dies ist nicht dargestellt - die unteren Kettenwerkzeuge 7 werden nach unten weggeführt; dabei werden diese von der fertigen Energieführungskette nach oben/unten abgezogen. Anschließend werden die nunmehr entleerten Kettenwerkzeuge 7 erneut dem links dargestellten Anfangsbereich der Vorrichtung zugeführt.
Es ist alternativ möglich, Metall zu gießen, zu Sintern oder Keramik zu verwenden, um die beschriebene Form zu füllen und die Kette herzustellen, anstatt flüssigen, verfestigbaren Kunststoff zu verwenden. Des weiteren ist es möglich, verschiedene Stoffe, insbesondere verschiedene Kunststoffe für die Herstellung einer Kette zu verwenden.

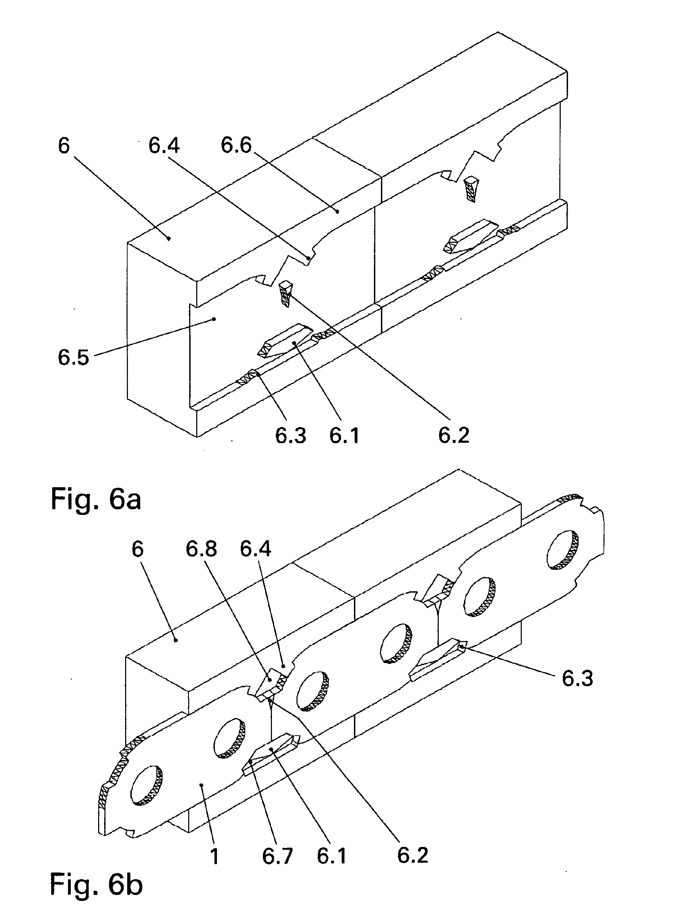

**Figur 6a** zeigt einen Ausschnitt der Vorrichtung nach Figur 5. Dabei sind zwei Aufnahmeelemente 6 dargestellt. Die Aufnahmeelemente 6 weisen eine ebene Innenfläche 6.6 auf, in die jeweils eine Kavität 6.5, ebenfalls eben ausgebildet, eingearbeitet ist. In der Kavität 6.5 sind jeweils mittig eine untere Erhebung 6.1 sowie eine obere Erhebung 6.2 angeordnet. Am unteren Rand der Kavität 6.5 sind untere Vorsprünge 6.3 ausgebildet und am oberen Rand der Kavität 6.5 sind jeweils zwei obere Vorsprünge 6.4 ausgebildet. Wie unter Figur 5 beschrieben, dienen die Aufnahmeelemente 6 dazu, Verbindungselemente 1 aufzunehmen als seitliche Begrenzung einer Spritzform zur Herstellung von Kettengliedern 2 zu dienen. Zur Aufnahme der Verbindungselemente 1 wird jeweils ein Verbindungselement 1 mittig zwischen zwei Aufnahmeelementen 6 eingelegt.

**Figur 6b** zeigt die beiden Aufnahmeelemente 6 gemäß Figur 6a mit eingelegten Verbindungselementen 1. Die unteren Vorsprünge 6.3 und die oberen Vorsprünge 6.4 dienen der Aufnahme der Verbindungselemente 1. Die unteren Erhebungen 6.1 und die oberen Erhebungen 6.2 schließen mit ihrer Oberfläche mit der Innenfläche der Verbindungselemente 1 ab und dienen dazu, später das Einspritzen von Kunststoff in diese Bereich zu vermeiden. Oberhalb der oberen Erhebung 6.2 wird mit den oberen Vorsprüngen 6.4 ein oberer Freiraum 6.8 gebildet, im unteren Bereich des Stoßes zwischen zwei Verbindungselementen 1 wird durch die untere Erhebung 6.1, die unteren Vorsprünge 6.3 und die Verbindungselemente 1 jeweils unterer Freiraum 6.7 gebildet. Die Freiräume 6.7 und 6. 8 dienen als Form für den einzuspritzenden Kunststoff, nämlich zur Formung der unteren und oberen Anschläge 2.2 und 2.3 der Kettenglieder 2. Die Aussparungen 1.1 der Verbindungselemente 1 dienen als Form für die in diese Aussparungen 1.1 einzuspritzenden Anteile des flüssigen Kunststoffes, sodass innerhalb der Aussparungen 1.1 die hier nicht gezeigten Gelenkzapfen der Kettenglieder gebildet werden können. Die in Figur 6b dargestellte Innenfläche der Verbindungselemente sowie sämtliche Erhebungen und Aussparungen werden vorzugsweise mit einem Trennmittel versehen. Dieses Trennmittel dient dazu, einen Verbund zwischen einzuspritzenden Kunststoff und dem dargestellten Elementen zu verhindern, sodass später nach dem Herstellen der Kettenglieder kein Haftverbund zwischen Kettengliedern und Verbindungselementen zu verzeichnen ist.

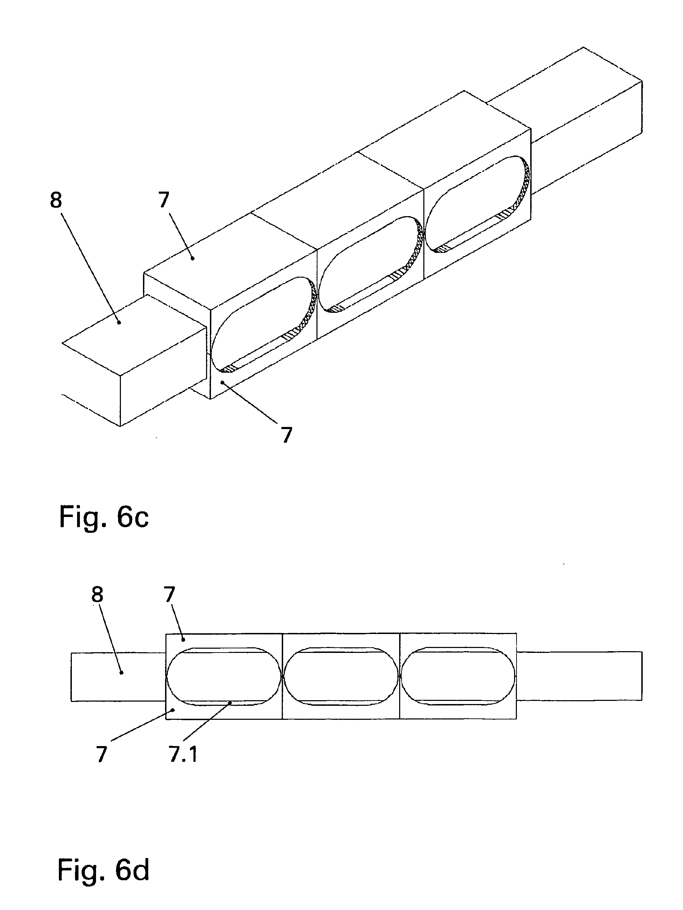

**Figur 6c** zeigt den Bereich der Vorrichtung nach Figur 5, wobei ausschließlich die Kettenwerkzeuge 7 und das Kernelement 8 gezeigt werden, in perspektivischer Ansicht.

**Figur 6d** zeigt eine Seitenansicht der Figur 6c. Erste Innenflächen 7.1 der Kettenwerkzeuge 7 sind parallel zu den Unter- bzw. Oberseiten des feststehenden Kernelementes 8 ausgebildet. Die Kettenwerkzeuge 7 sind jeweils paarweise korrespondierend zueinander angeordnet und werden an dem Kernelement 8 vorbeigeführt. Die Kettenwerkzeuge 7 sind am Ende der Fertigungsrichtung jeweils nach oben und unten weggeführt. Im hier dargestellten Abschnitt des Herstellungsverfahren sind die Kettenwerkzeuge 7 noch nicht weggeführt. Der Hohlraum, der sich zwischen den ersten Innenflächen 7.1 und den Ober- bzw. Unterseiten des Kernelementes 8 bildet, dient zur Formung der unteren Stege 2.4 bzw. der oberen Stege 2.5 der hier nicht dargestellten Kettenglieder 2.

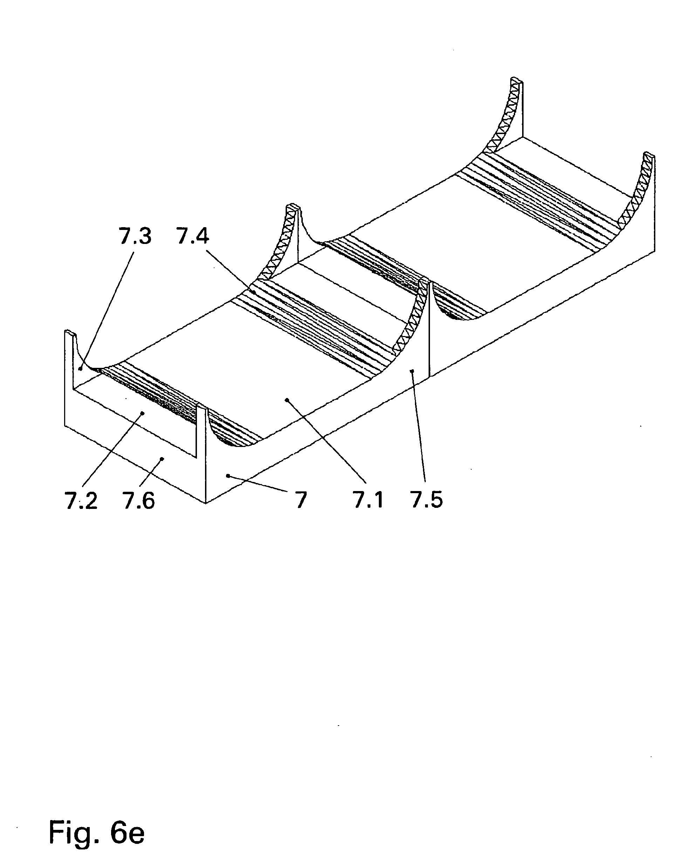

**Figur 6e** zeigt zwei benachbarte untere Kettenwerkzeuge 7 ohne die korrespondierenden oberen Kettenwerkzeuge 7. Jedes Kettenwerkzeug 7 weist die vorab beschriebene ebene erste Innenfläche 7.1 auf, welche in eine Rundung 7.4 übergeht. Etwas oberhalb der ersten Innenfläche 7.1 befinden sich an den Enden jedes Kettenwerkzeuges 7 zwei zweite Innenflächen 7.2, die ebenfalls eben ausgebildet sind und parallel zu den ersten Innenflächen 7.1 verlaufen. Jedes Kettenwerkzeug 7 weist vier Seitenwände 7.3 auf, jeweils eine Seitenwand 7.3 in einer Ecke. Jede Seitenwand 7.3 nimmt den Verlauf der Rundung 7.4 auf. Die zweiten Innenflächen 7.2 dienen dazu, an der Unterseite des Kernelementes 8 zu gleiten. Durch die Anordnung mehrerer Kettenwerkzeuge hintereinander und korrespondierend oberhalb des Kernelementes 8 mit ebenfalls korrespondierenden Aufnahmeelementen 6, welche an den Seitenflächen des Kernelementes 8 vorbei gleiten, gelingt es, eine sich bewegende und am feststehenden Kernelement 8 vorbei gleitende Spritzform herzustellen, mit der einzelne Kettenelemente gespritzt werden, die in Wirkzusammenhang mit in die Aufnahmeelemente 6 eingelegten Verbindungselemente 1 gelangen, sodass in einem kontinuierlichen fortlaufenden Prozess eine Energieführungskette hergestellt wird, ohne dass zusätzliche Umform-, Füge- oder sonstige Montagearbeiten erforderlich sind.

Sämtliche der in den zuvor beschriebenen Figuren erwähnten Ketten sind zweibandig ausgebildet, das heißt, dass an jedem Ende eines Kettengliedes 2 zwei korrespondierende Verbindungselemente 1 angeordnet sind. Es ist möglich, die jeweils korrespondierenden Verbindungselemente 1 mit einander zu verbinden und dadurch die Torsionssteifigkeit dieser zweibandigen Ketten zu vergrößern.
Es ist jedoch auch möglich, einbandige Ketten herzustellen, das heißt solche Ketten, bei denen zwei benachbarte Kettenglieder durch genau ein Verbindungselement verbunden sind.
Daneben ist es natürlich ebenfalls möglich, mehrbandige Ketten auszubilden, das heißt solche Ketten, bei denen in Kettenlängsrichtung benachbarte Kettenglieder durch zwei oder mehr Verbindungselemente verbunden sind.

Das erfindungsgemäße Verfahren kann fortlaufend durchgeführt werden, d.h. es können aus Spritz- oder Stranggußprofilen mit Rechteck und oder

Kastenprofil beliebig lange Förder-, Antriebs oder Energieführungsketten gefertigt werden. Es sind keine Montagevorgänge erforderlich. Es ist möglich, die jeweilige Kette aus massiven Profil zu fertigen, so dass sich über den Querschnitt gesehen keine Schwachstellen an den Kanten bzw. den Übergängen zwischen unterer Fläche, oberer Fläche und den Seitenflächen ergeben.

Die angegebenen Verfahrensschritte, um aus Stranggußteilen die einzelnen Kettenglieder einer Führungskette herauszuarbeiten, sind in ihrer Reihenfolge im wesentlichen nicht festgelegt und können in ihrer Reihenfolge umgeordnet werden oder wenigstens teilweise gleichzeitig ausgeführt werden. Die Reihenfolge ist variabel, weil die Kettenglieder während des Verfahrensablaufs nicht separiert werden müssen, da die Gelenkverbindung aus dem Stranggußteil durch die definierten Formungsvorgänge herausgearbeitet werden.

Als Kastenprofil in Bezug auf die Kettenglieder sind beliebige Querschnittsform zu verstehen; beispielsweise quadratische, rechteckige, runde oder ovale Formen.

Die Gelenkzapfen müssen nicht kreisrund ausgebildet sein; es ist ausreichend, wenn diese segmentweise kreisförmig ausgebildet sind, so dass diese wenigstens segmentweise innerhalb der Öffnungen 1.1 drehbar sind. In diesem Fall kann das Gelenk selbst als Anschlag zur Begrenzung einer Verdrehung dienen. Die Verbindungselemente 1 und die Kettenglieder 3 können aus ur- oder umformbaren Materialien wie zum Beispiel Kunststoff und/oder Metall hergestellt werden.

Es ist des weiteren möglich, zuerst die Kettenglieder 2 herzustellen und erst anschließend die Verbindungselemente 1 durch Spritzguss herzustellen.

Es ist auch möglich, am Ende des Fertigungsverfahrens Elemente der Kette, insbesondere benachbarte Verbindungselemente 1 durch Durchtrennen einer Sollbruchstelle zu trennen.

### BEZUGSZEICHENLISTE

- 1: Verbindungselement
1.1 Aussparung
1.2 oberer Rücksprung
1.3 unterer Rücksprung
- 2: Kettenglied
2.1 Gelenkzapfen
2.2 oberer Anschlag
2.3 unterer Anschlag
2.4 unterer Steg
2.5 oberer Steg
2.6 Seitenwand
2.7 Rundung
- 3: erstes Werkzeug
3.1 Erhebung
3.2 oberer Vorsprung
3.3 unterer Vorsprung
3.5 Kavität
3.6 Innenfläche
3.7 Messer
- 4: Extruderdüse
4.1 Eintrittsöffnung
4.2 Austrittsöffnung
- 5: Stranggut
- 6: Aufnahmeelement
6.1 untere Erhebung
6.2 obere Erhebung
6.3 unterer Vorsprung
6.4 oberer Vorsprung
6.5 Kavität
6.6 Innenfläche
6.7 unterer Freiraum
6.8 unterer Freiraum
- 7: Kettenwerkzeug
7.1 erste Innenfläche
7.2 zweite Innenfläche
7.3 Seitenwand
7.4 Rundung
7.5 Seitenfläche
7.6 Stirnfläche
- 8: Kernelement
- 9: Gegenstück

## Patentansprüche

1. Verfahren zum Herstellen einer Kette, welche aus Kettengliedern (2) und Verbindungselementen (1) besteht, **dadurch gekennzeichnet, dass**
(a) Verbindungselemente (1) mit jeweils zwei Aussparungen (1.1) verwendet werden, dass
(b) die Verbindungselemente (1) in Kavitäten (3.5) in ersten Werkzeugen (3) eingelegt werden und dass
(c) Kettenglieder (2) unter Kontakt zumindest zu Teilbereichen von Verbindungselementen (1) hergestellt werden, wobei innerhalb der Aussparungen (1.1) Gelenkzapfen (2.1) erzeugt werden, welche Bestandteil der Kettenglieder (2) sind.

2. Verfahren zum Herstellen einer Kette, welche aus Kettengliedern (2) und Verbindungselementen (1) besteht, **dadurch gekennzeichnet, dass**
(a) Verbindungselemente (1) mit jeweils zwei Gelenkzapfen verwendet werden, dass
(b) die Verbindungselemente (1) in Kavitäten (6.5) in Aufnahmeelementen (3) eingelegt werden und dass
(c) Kettenglieder (2) unter Kontakt zumindest zu Teilbereichen von Verbindungselementen (1) hergestellt werden, wobei die Gelenkzapfen der Verbindungselemente (1) drehbar innerhalb der Kettenglieder (2) verbleiben.

3. Verfahren zum Herstellen einer Kette, welche aus Kettengliedern (2) und Verbindungselementen (1) besteht, **dadurch gekennzeichnet, dass**
(a) Kettenglieder (2) mit Gelenkzapfen (2.1) verwendet werden, dass
(b) die Kettenglieder (2) in Werkzeuge eingelegt werden und dass anschließend
(c) Verbindungselemente (1) mit jeweils zwei Aussparungen (1.1) unter Kontakt zumindest zu Teilbereichen von Kettengliedern (2) hergestellt werden, wobei die Gelenkzapfen der Kettenglieder (2) drehbar innerhalb der Verbindungselemente (1) verbleiben.

4. Verfahren zum Herstellen einer Kette, welche aus Kettengliedern (2) und Verbindungselementen (1) besteht, **dadurch gekennzeichnet, dass**
(a) Kettenglieder (2) mit Aussparungen verwendet werden, dass
(b) die Kettenglieder (2) in Werkzeuge eingelegt werden und dass
(c) die Verbindungselemente (1) mit jeweils zwei drehbaren Gelenkzapfen unter Kontakt zumindest zu Teilbereichen von Kettengliedern (2) hergestellt werden, wobei die Gelenkzapfen der Verbindungselemente (1) innerhalb der Aussparungen der Kettenglieder (2) erzeugt werden.

5. Verfahren nach einem der Ansprüche 1 bis 4, **dadurch gekennzeichnet, dass** zwischen Verfahrensschritt (b) und (c) ein Trennmittel auf die Verbindungselemente (1) und/oder wenigstens Teilbereiche der ersten Werkzeuge (3) oder auf das Kettenglied (3) und/oder auf die Werkzeuge, in die die Kettenglieder (3) einlegbar sind, aufgebracht wird.

6. Verfahren nach einem der vorhergehenden Ansprüche, **dadurch gekennzeichnet, dass** die Aussparungen (1.1) als Hinterschneidung ausgebildet werden.

7. Verfahren nach Anspruch 6, **dadurch gekennzeichnet, dass** die hinterschneidenden, drehbaren Gelenkzapfen (2.1) wenigstens segmentweise kegelstumpfförmig oder stufenförmig zylindrisch oder ballig oder ähnlich verjüngend in den korrespondierenden Aussparungen (1.1) ausgebildet werden.

8. Verfahren nach einem der vorhergehenden Ansprüche, **dadurch gekennzeichnet, dass** die Verbindungselemente (1) jeweils paarweise gegenüber liegend angeordnet werden, so dass an jedem Ende eines Kettengliedes (3) zwei Verbindungselemente (1) angeordnet werden.

9. Verfahren nach einem der vorhergehenden Ansprüche, **dadurch gekennzeichnet, dass** die Herstellung der Kette kontinuierlich erfolgt.

10. Verfahren nach einem der Ansprüche 1 und 5 bis 9, **dadurch gekennzeichnet, dass** an den Kettengliedern (2) Anschläge (2.2, 2.3) zur Begrenzung des Verdrehung zwischen Verbindungselementen (1) und Kettengliedern (3) hergestellt werden.

11. Verfahren nach einem der vorhergehenden Ansprüche, **dadurch gekennzeichnet, dass** die Verbindungselemente (1) und/oder die Kettenglieder (3) aus Kunststoff und/oder aus Metall hergestellt werden.

12. Verfahren nach einem der vorhergehenden Ansprüche, **dadurch gekennzeichnet, dass** die Verbindungselemente (1) und/oder die Kettenglieder (3) durch Spritzen und/oder Strangpressen und/oder Sintern hergestellt werden.

13. Verfahren nach einem der vorhergehenden Ansprüche, **dadurch gekennzeichnet, dass** die Verbindungselemente (1) mit an Stelle von jeweils zwei Aussparungen (1.1) oder jeweils zwei Gelenkzapfen (2.1) mit jeweils einer Aussparung (1.1) und einem Gelenkzapfen (2.1) hergestellt werden.

14. Verfahren nach Anspruch 13, **dadurch gekennzeichnet, dass** die Kettenglieder (2) mit an Stelle von jeweils vier Gelenkzapfen (2.1) oder jeweils vier Aussparungen mit jeweils zwei Gelenkzapfen (2.1) und zwei Aussparung hergestellt werden.

15. Verfahren nach Anspruch 13, **dadurch gekennzeichnet, dass** die Kettenglieder (2) mit an Stelle von jeweils zwei Gelenkzapfen (2.1) oder jeweils zwei Aussparungen mit jeweils einem Gelenkzapfen (2.1) und einer Aussparung hergestellt werden.

16. Vorrichtung zum im wesentlichen kontinuierlichen Herstellen einer Kette, welche aus Kettengliedern (2) und Verbindungselementen (1) besteht, insbesondere zum Herstellen einbandiger Ketten, **dadurch gekennzeichnet,**
**dass** führbare Aufnahmeelemente (6) zur Aufnahme von Verbindungselementen (1) vorgesehen sind,
**dass** Kettenwerkzeuge (7) mit den Aufnahmeelementen (6) korrespondierend führbar angeordnet sind,
und **dass** die Kettenwerkzeuge (7) mit den korrespondierenden Aufnahmeelementen (6) einen Hohlraum zur Herstellung von Kettengliedern (2) bilden, wobei in diesen Hohlraum sich verfestigende Stoffe einbringbar sind.

17. Vorrichtung nach Anspruch 16, insbesondere zur Herstellung mehrbandiger Ketten, **dadurch gekennzeichnet,**
**dass** die führbaren Aufnahmeelemente (6) seitlich korrespondierend angeordnet sind,
**dass** diese Aufnahmeelemente (6) wenigstens bereichsweise derart beabstandet sind, dass das Maß dieser Beabstandung der Breite von Kettenwerkzeugen (7) entspricht,
**dass** diese Kettenwerkzeuge (7) sich gegenüberliegend korrespondierend angeordnet sind,
wobei korrespondierende Kettenwerkzeuge (7) sich wenigstens bereichsweise berührend angeordnet sind,
**dass** der Bereich, in welchem sich die korrespondierenden Kettenwerkzeuge (7) berühren im wesentlichen dem Bereich entspricht, in dem die Aufnahmeelemente (6) in Breite der Kettenwerkzeuge beabstandet sind
und **dass** in diesem Bereich die korrespondierenden Kettenwerkzeuge (7) mit den korrespondierenden Aufnahmeelementen (6) einen Hohlraum zur Herstellung von Kettengliedern (2) bilden.

18. Vorrichtung nach Anspruch 16 oder 17, **dadurch gekennzeichnet, dass** in dem Hohlraum ein Kernelement (8) zur Erzeugung eines Innenraumes in herzustellenden Kettengliedern angeordnet ist, wobei korrespondierende Kettenglieder (2) wenigstens bereichsweise am Kernelement (8) gleiten.

19. Vorrichtung nach einem der Ansprüche 16 bis 18, **dadurch gekennzeichnet, dass** Mittel zum Auftragen eines Trennmittels auf Verbindungselemente (1), und/oder Aufnahmeelemente (6) und/oder Kernelement (8) angeordnet sind.

20. Vorrichtung nach einem der Ansprüche 16 bis 19, **dadurch gekennzeichnet, dass** die Aufnahmeelemente (6) und/oder die Kettenwerkzeuge (7) von der hergestellten Kette wegführbar und dem entgegen der Fertigungsrichtung liegendem Ende der Vorrichtung zuführbar sind.

21. Vorrichtung nach einem der Ansprüche 16 bis 20, **dadurch gekennzeichnet, dass** wenigstens ein erstes Werkzeug (3) zur Herstellung von Verbindungselementen (1) angeordnet ist.

22. Vorrichtung nach einem der Ansprüche 16 bis 21, **dadurch gekennzeichnet, dass** Mittel zum Bestücken der Aufnahmeelemente (6) mit Verbindungselementen angeordnet sind.

## Claims

1. Method for producing a chain, which is composed of chain links (2) and of connecting elements (1), **characterized in that**
(a) connecting elements each having two holes (1.1) are used, **in that**
(b) the connecting elements (1) are inserted into cavities (3.5) in first tools (3) and **in that**
(c) chain links (2) are produced with contact to at least partial areas of connecting elements (1), wherein inside the holes (1.1) joint pins (2.1) are used, that are part of the chain links (2).

2. Method for producing a chain, which is composed of chain links (2) and of connecting elements (1), **characterized in that**
(a) connecting elements (1) each having two joint pins are used, **in that**
(b) the connecting elements (1) are inserted into cavities (6.5) in receiving elements (3) and **in that**
(c) chain links (2) are produced with contact at least to partial areas of connecting elements (1), wherein the joint pins of the connecting elements (1) remain rotatable inside the chain links (2).

3. Method for producing a chain, which is composed of chain links (2) and of connecting elements (1), **characterized in that**
(a) chain links (2) with joint pins (2.1) are used,
**in that**
(b) the chain links (2) are inserted into dies and **in that** thereafter
(c) connecting elements (1), each having two holes (1.1) are produced with contact at least to partial areas of the chain links (2), the joint pins of the chain links (2) remaining rotatable within the connecting elements (1).

4. Method for producing a chain, which is composed of chain links (2) and of connecting elements (1), **characterized in that**
(a) chain links (2) having cutouts are used, **in that**
(b) the chain links (2) are inserted into tools and **in that**
(c) the connecting elements (1) are produced each having two rotatable joint pins with contact at least to partial areas of chain links (2), wherein the joint pins of the connecting elements (1) are produced inside the holes of the chain links (2).

5. Method according to one of claims 1 to 4, **characterized in that** between method steps (b) and (c) a release agent is applied to the connecting elements (1) and/or at least partial areas of the first dies (3) or to the chain link (3) and/or to the dies, into which the chain links (3) can be inserted.

6. Method according to one of the preceding claims, **characterized in that** the cutouts (1.1) are configured as an undercut.

7. Method according to claim 6, **characterized in that** the undercut, rotatable pivots (2.1) are configured at least in segments to be frustoconical or cylindrical in a stepped manner or spherical or tapering in a similar manner in the corresponding cutouts (1.1).

8. The method according to one of the preceding claims, **characterized in that** the connecting elements (1) are arranged in each case in pairs in a manner which lies opposite one another, with the result that two connecting elements (1) are arranged at each end of a chain link (3).

9. The method according to one of the preceding claims, **characterized in that** the production of the chain takes place continuously.

10. The method according to one of claims 1 and 5 to 9, **characterized in that** stops (2.2, 2.3) for limiting the rotation between connecting elements (1) and chain links (3) are produced on the chain links (2).

11. The method according to one of the preceding claims, **characterized in that** the connecting elements (1) and/or the chain links (3) are produced from plastic and/or from metal.

12. The method according to one of the preceding claims, **characterized in that** the connecting elements (1) and/or the chain links (3) are produced by injection molding and/or extrusion and/or sintering.

13. The method according to one of the preceding claims, **characterized in that** the connecting elements (1) are produced with instead of in each case two cutouts (1.1) or in each case two pivots (2.1), in each case with one cutout (1.1) and one pivot (2.1).

14. The method according to claim 13, **characterized in that** the chain links (2) are produced with in each case two pivots (2.1) and two cutouts instead of in each case four pivots (2.1) or in each case four cutouts.

15. The method according to claim 13, **characterized in that** the chain links (2) are produced with in each case one pivot (2.1) and one cutout instead of in each case two pivots (2.1) or in each case two cutouts.

16. A device for the substantially continuous production of a chain, which comprises chain links (2) and connecting elements (1), in particular for the production of single-band chains, **characterized in that** movable receiving elements (6) are provided for receiving connecting elements (1), **in that** chain dies (7) are arranged movably in a manner, which corresponds with the receiving elements (6), and **in that** the chain dies (7) form, with the corresponding receiving elements (6), a hollow space for producing chain links (2), wherein solidifying materials can be introduced into this hollow space.

17. The device according to claim 16, in particular for the production of multiple-band chains, **characterized in that** the movable receiving elements (6) are arranged in a laterally corresponding manner, **in that** these receiving elements (6) are spaced apart at least in regions in such a way that the magnitude of this spacing corresponds to the width of chain dies (7), **in that** these chain dies (7) are arranged in a manner, which corresponds to and lies opposite to one another, corresponding chain dies (7) being arranged so as to be in contact with one another at least in regions, **in that** the region, in which the corresponding chain dies (7) are in contact, corresponds substantially to the region, in which the receiving elements (6) are spaced apart in the width of the chain dies, and **in that**, in this region, the corresponding chain dies (7) form, together with the corresponding receiving elements (6) a hollow space for the production of chain links (2).

18. The device according to claim 16 or 17, **characterized in that** a core element (8) is arranged in the hollow space for the production of an inner space in chain links, which are to be produced, corresponding chain links (2) sliding on the core element (8) at least in regions.

19. The device according to one of claims 16 to 18, **characterized in that** means are arranged for applying a release agent to connecting elements (1) and/or receiving elements (6) and/or the core element (8).

20. The device according to one of claims 16 to 19, **characterized in that** the receiving elements (6) and/or the chain dies (7) can be guided away from the produced chain and can be fed to that end of the device, which lies counter to the production direction.

21. The device according to one of claims 16 to 20, **characterized in that** at least one first die (3) is arranged for the production of connecting elements (1).

22. The device according to one of claims 16 to 21, **characterized in that** means are arranged for fitting the receiving elements (6) with connecting elements.

## Revendications

1. Procédé destiné à fabriquer une chaîne qui consiste en maillons de chaîne (2) et en des éléments de connexion (1), **caractérisé en ce que**
(a) des éléments de connexion (1) ayant chacun deux évidements (1.1) sont utilisés, **en ce que**
(b) les éléments de connexion (1) sont disposés dans des cavités (3.5) dans de premiers outils (3) et **en ce que**
(c) des maillons de chaîne (2) sont fabriqués en contact au moins avec des régions partielles d'éléments de connexion (1), des pivots (2.1) étant formés à l'intérieur des évidements (1.1), qui font partie des maillons de chaîne (2).

2. Procédé destiné à fabriquer une chaîne qui consiste en maillons de chaîne (2) et en des éléments de connexion (1), **caractérisé en ce que**
(a) des éléments de connexion (1) ayant chacun deux pivots sont utilisés, **en ce que**
(b) les éléments de connexion (1) sont disposés dans des cavités (6.5) dans des éléments de logement (3) et **en ce que**
(c) des maillons de chaîne (2) sont fabriqués en contact au moins avec des régions partielles d'éléments de connexion (1), les pivots des éléments de connexion (1) restant pivotables à l'intérieur des maillons de chaîne (2).

3. Procédé destiné à fabriquer une chaîne qui consiste en maillons de chaîne (2) et en des éléments de connexion (1), **caractérisé en ce que**
(a) des maillons de chaîne (2) avec des pivots (2.1) sont utilisés **en ce que**
(b) les maillons de chaîne (2) sont disposés dans des outils et qu'ensuite
(c) des éléments de connexion (1) ayant chacun deux évidements (1.1), sont fabriqués en contact avec au moins des régions partielles de maillons de chaîne (2), les pivots des maillons de chaîne (2) restant rotatifs à l'intérieur des éléments de connexion (1).

4. Procédé destiné à fabriquer une chaîne qui consiste en maillons de chaîne (2) et en des éléments de connexion (1), **caractérisé en ce que**
(a) des maillons de chaîne (2) sont utilisés avec des évidements, **en ce que**
(b) les maillons de chaîne (2) sont disposés dans des outils et **en ce que**
(c) les éléments de connexion (1) sont fabriqués, chacun avec deux pivots rotatifs au moins en contact avec des régions partielles de maillons de chaîne (2), les pivots des éléments de connexion (1) étant générés à l'intérieur des évidements des maillons de chaîne (2).

5. Procédé selon l'une des revendications 1 à 4, **caractérisé en ce qu'**entre l'étape de procédé (b) et (c) un agent séparateur est rapporté sur les éléments de connexion (1) et/ou au moins les régions partielles des premiers outils (3) ou sur le maillon de chaîne (3) et/ou sur les outils, dans lesquels les maillons de chaîne (3) peuvent être disposés.

6. Procédé selon l'une des revendications précédentes, **caractérisé en ce que** les évidements (1.1) sont réalisés en tant que contre-dépouille.

7. Procédé selon la revendication 6, **caractérisé en ce que** les pivots (2.1) rotatifs contre-dépouillés sont réalisés au moins en segments en forme de cônes tronqués ou cylindriques ou bombés par étapes ou prennent une forme conique dans les évidements (1.1) correspondants.

8. Procédé selon l'une des revendications précédentes, **caractérisé en ce que** les éléments de connexion (1) sont agencés à chaque fois en vis-à-vis par paires, de sorte que deux éléments de connexion (1) sont agencés à chaque extrémité d'un maillon de chaîne (3).

9. Procédé selon l'une des revendications précédentes, **caractérisé en ce que** la fabrication de la chaîne est effectuée continuellement.

10. Procédé selon l'une des revendications 1 et 5 à 9, **caractérisé en ce que** des butées (2.2, 2.3) sont fabriquées sur les maillons de chaîne (2) pour limiter la torsion entre les éléments de connexion (1) et les maillons de chaîne (3).

11. Procédé selon l'une des revendications précédentes, **caractérisé en ce que** les éléments de connexion (1) et/ou les maillons de chaîne (3) sont fabriqués en matière plastique et/ou en métal.

12. Procédé selon l'une des revendications précédentes, **caractérisé en ce que** les éléments de connexion (1) et/ou les maillons de chaîne (3) sont fabriqués par moulage par injection et/ou par extrusion et/ou par frittage.

13. Procédé selon l'une des revendications précédentes, **caractérisé en ce que** les éléments de connexion (1) sont fabriqués avec respectivement un évidement (1.1) et un pivot (2.1) au lieu de respectivement deux évidements (1.1) ou respectivement deux pivots (2.1).

14. Procédé selon la revendication 13, **caractérisé en ce que** les maillons de chaîne (2) sont fabriqués avec respectivement deux pivots (2.1) et deux évidements au lieu de respectivement quatre pivots (2.1) ou respectivement quatre évidements.

15. Procédé selon la revendication 13, **caractérisé en ce que** les maillons de chaîne (2) sont fabriqués respectivement avec un pivot (2.1) et un évidement au lieu de respectivement deux pivots (2.1) ou respectivement deux évidements.

16. Dispositif pour fabriquer sensiblement de façon continue une chaîne qui comprend des maillons de chaîne (2) et des éléments de connexion (1), notamment pour la fabrication de chaînes à une bande, **caractérisé en ce que** pour le logement d'éléments de connexion (1) des éléments de logement guidables (6) sont prévus,
**en ce que** des outils à chaîne (7) sont agencés de façon guidable correspondant avec les éléments de logement,
et **en ce que**
les outils à chaîne (7) forment avec les éléments de logement (6) une cavité pour la fabrication de maillons de chaîne (2), des matériaux se solidifiant pouvant être disposés.

17. Dispositif selon la revendication 16, notamment pour la fabrication de chaînes à bandes multiples, **caractérisé en ce que** les éléments de logement guidables (6) sont agencés latéralement de façon correspondante,
**en ce que** ces éléments de logement (6) sont agencés à distance les uns des autres par régions de manière telle que le degré de cette distance correspond à la largeur d'outils à chaînes (7),
**en ce que** ces outils à chaînes (7) sont agencés en vis-à-vis de manière correspondante,
des outils à chaînes correspondants (7) étant agencés en ce contactant au moins par régions,
**en ce que** la région, dans laquelle les outils à chaîne (7) correspondants se contactent, correspond sensiblement à la région, dans laquelle les éléments de logement (6) sont écartés en largeur des outils à chaîne et **en ce que** dans cette région les outils à chaîne correspondants (7) forment avec les éléments de logement correspondants (6) une cavité pour la fabrication de maillons de chaîne (2).

18. Dispositif selon la revendication 16 ou 17, **caractérisé en ce que** dans la cavité un élément central (8) est agencé pour générer un espace intérieur dans des maillons de chaîne devant être fabriqués, des maillons de chaîne correspondants (2) glissant au moins par régions sur l'élément central (8),

19. Dispositif selon l'une des revendications 16 à 18, **caractérisé en ce que** des agents pour appliquer un agent séparateur sur des éléments de connexion (1), et/ou des éléments de logement (6) et/ou un élément central (8) sont disposés.

20. Dispositif selon l'une des revendications 16 à 19, **caractérisé en ce que** les éléments de logement (6) et/ou les outils à chaîne (7) peuvent être emmenés loin de la chaîne confectionnée et peuvent être alimentés vers l'extrémité du dispositif, laquelle se trouve dans le sens opposé de fabrication.

21. Dispositif selon l'une des revendications 16 à 20, **caractérisé en ce qu'**au moins un premier outil (3) est agencé pour la fabrication d'éléments de connexion (1).

22. Dispositif selon l'une des revendications 16 à 21, **caractérisé en ce que** des moyens sont agencés pour garnir les éléments de logement (6) avec des éléments de connexion (1).
